# EUROPÄISCHE PATENTSCHRIFT

(11) **EP 2 925 594 B1**
(45) Veröffentlichungstag und Bekanntmachung des Hinweises auf die Patenterteilung: **11.01.2017**
(21) Anmeldenummer: 13821659.3
(22) Anmeldetag: 26.11.2013
(51) Int. Cl.: B62K 21/16

(54) **HÖHENVERSTELLBARER LENKERVORBAU**
HEIGHT-ADJUSTABLE HANDLEBAR STEM
POTENCE DE GUIDON RÉGLABLE EN HAUTEUR

(30) Priorität: 27.11.2012 DE 102012023092
(43) Veröffentlichungstag der Anmeldung: 07.10.2015
(73) Patentinhaber: Rawinski, Roman, 80 003 Gdansk (PL)
(72) Erfinder: Rawinski, Roman, 80 003 Gdansk (PL)
(74) Vertreter: Spahn, Tobias
(86) Internationale Anmeldenummer: PCT/DE2013/000697
(87) Internationale Veröffentlichungsnummer: WO 2014/082617

(56) Entgegenhaltungen:
- DE-U1- 9 212 076
- DE-U1- 29 806 078
- US-A1- 2002 112 561
- US-B1- 6 244 131

## Beschreibung

### 1. Technisches Gebiet:

Die vorliegende Erfindung betrifft einen höhenverstellbaren Lenkervorbau für Fahrzeuge mit Lenkerbügel.

### 2. Stand der Technik:

Vorbauten für Fahrzeuge mit Lenkerbügel verbinden den Lenkerbügel mit der Gabel des Vorderrades. Zur Befestigung an der Gabel besitzen herkömmliche Vorbauten am Ende eines Lenkerschaftes einen Spreiz- oder Schrägkonus, mit welchem sie in den Gabelschaft gesteckt und mittels Kraftschluss fixiert werden können (Schaftvorbau). Bei dieser Befestigungsart lässt sich die Höhe des Lenkerbügels durch die Positionierung des Lenkerschaftes innerhalb des Gabelschaftes stufenlos einstellen. Ein Nachteil liegt bei dieser Konstruktionsweise darin, dass der Vorbau während der Verstellung der Lenkerhöhe in zwei Frei-heitsgraden - in der Höhe durch axiale Vierschiebung innerhalb des Gabelschaftes und in Rotation quer zur Fahrtrichtung durch Verdrehen innerhalb des Gabelschaftes - beweglich ist. Hierdurch wird die Höhenverstellung des Lenkers erschwert, da gleichzeitig auf die rotative Orientierung quer zur Fahrtrichtung geachtet werden muss. Als weitere Konstruktionsweise sind Vorbauten bekannt, welche auf den Gabelschaft gesteckt und mittels einer Schraubverbindung kraftschlüssig verklemmt werden ("Aheadset"-Vorbauten). Bei dieser Konstruktionsweise ist der Vorbau nicht in der Höhe verstellbar, da er eine feste Position auf dem Gabelschaft einnimmt. Bei einem entsprechend langen Gabelschaft kann eine Vergrößerung der Lenkerhöhe mittels Distanzhülsen erreicht werden, was sehr aufwändig ist. Sowohl Schaftvorbauten, als auch Aheadset-Vorbauten sind als im Winkel verstellbare Vorbauten erhältlich, bei welchen zwischen Gabel und Lenker ein parallel zur Längsachse der Verbindung bewegliches Drehgelenk vorgesehen ist, welches mit einer Schraubverbindung lösbar fixiert ist. Hierdurch kann über den wählbaren Anstellwinkel des Vorbaus die Lenkerhöhe verändert werden. Da sich hierbei der mit dem Vorbau fest verbundene Lenkerbügel allerdings mit dem Vorbau mitdreht, ändert sich auch der Winkel der Anbauten am Lenkerbügel (Bremsgriffe, etc.) relativ zur Sitzposition des Benutzers, weshalb die Montage der Anbauten nach der Änderung der Lenkerhöhe einzeln manuell angepasst werden muss.

Aus der DE 92 12 076 U1, welche den nächsten Stand der Technik darstellt und die Präambel des Anspruchs 1 offenbart, ist ein Vorbau für Lenker von Fahrrädern bekannt, bei welchem die Verbindung zwischen Gabelschaft und Lenkerbügel als doppeltes Parallelgestänge mit zwei übereinander angeordneten Stangenpaaren ausgebildet ist, die jeweils seitlich an den Gabelschaft angreifen, wobei die Stangen an den Enden jeweils senkrecht zur ihrer Längsachse drehbeweglich gelagert sind und die Lagerung an einem Ende der Stangen eines zueinander horizontal angeordneten Stangenpaares in ihrem Freiheitsgrad lösbar fixiert ist. Zur drehbeweglichen Lagerung der Stangen schlägt die DE 92 12 076 U1 vor, dass die Stangen jeweils mittels einer zylindrischen Öffnung und einer durchgehenden inneren Lagerachse als Drehlager ausgestaltet sind. Zur Fixierung der Drehlager schlägt die DE 92 12 076 U1 zusätzliche Sperrstücke vor, welche an einem Ende der Stangen eines horizontal angeordneten Stangenpaares axial verschiebbar auf der entsprechenden Lagerachse geführt sind und über Wirkflächen einen Kraft- und/oder Formschluss mit den Stangen herstellen, indem sie mittels einer zwischen den Sperrstücken exzentrisch positionierten Drehriegel nach außen verdrängt und innen an die Stangen gedrückt werden. In dieser Fixierungsposition üben die Sperrstücke über stirnseitigen Wirkflächen einen Kraft- und/oder Formschluss auf die Stangen aus. Die von der DE 92 12 076 U1 vorgeschlagene Konstruktion besitzt den Nachteil, dass mit den auf der durchgehenden inneren Lagerachse axial verschiebbaren geführten Sperrstücken zusätzliche gesonderte Bauteile vorgesehen sind. Die Konstruktion besitzt gleichzeitig den weiteren Nachteil, dass die auf den Fixierungsmechanismus wirkenden Momente über die kraft- und/oder formschlüssige Verbindungen der Sperrstücke mit den Stangen stets ausschließlich auf ein Stangenpaar wirken. Auf den Lenkervorbau eines Zweirades wirken bei der Benutzung erhebliche Kräfte, insbesondere bei schweren Fahrzeugführern, bei hohen Fahrgeschwindigkeiten, bei Fahrten im Gelände und den damit verbundenen Stößen oder bei der zusätzlichen Belastung der Lenkstange mit einem beladenen Fahrradkorb. Dies führt bei der von der DE 92 12 076 U1 vorgeschlagene Konstruktion zur einem hohen Verschleiß auf den Wirkflächen der der Sperrstücke und der korrespondierenden Flächen der Stangen und bei der Ausgestaltung als rein kraftschlüssige Verbindung zu einer bei hoher Beanspruchung instabilen Konstruktion.

Aus der DE 29 901 975 U1 ist ein Vorbau für Lenker von Fahrrädern bekannt, bei welchem die Verbindung zwischen Gabelschaft und Lenkerbügel als Verbindungsstück mit einer darunter mittig angeordneten Stange ausgebildet ist, wobei das Verbindungsstück zwischen Gabelschaft und Lenkerbügel angeordnet und das Verbindungsstück und die Stange an den Enden jeweils senkrecht zur ihrer Längsachse drehbeweglich gelagert sind und die Lager als Drehlager mit außen liegenden Lagerschalen und inneren Lagerzapfen ausgestaltet sind, wobei die außen liegenden Lagerschalen jeweils durch eine zylindrische Öffnung im Verbindungsstück und in der Stangen gebildet sind. Der Lenkervorbau nach der DE 29 901 975 U1 sieht eine lösbare Fixierung der Drehlager an beiden Enden des Verbindungsstücks vor, indem Rastscheiben und Klemmscheiben axial verschiebbar auf den Lagerachsen des Verbindungsstücks geführt sind und zur Fixierung formschlüssig auf Profilachsen des Verbindungsstücks greifen und jeweils mittels einer Klemmeinrichtung über einen Kraftschluss mit dem Verbindungsstück fest verbindbar sind. Der Anstellwinkel des Lenkervorbaus ist hierbei in Raststufen über eine stirnseitige Verzahnung der Rastscheiben wählbar. Auch die von der DE 29 901 975 U1 vorgeschlagene Konstruktion besitzt den Nachteil, dass mit den auf der durchgehenden inneren Lagerachse axial verschiebbaren Rast- und Klemmscheiben zusätzliche gesonderte Bauteile vorgesehen sind und nur die Fixierung eines Stangenpaares vorgesehen ist, an dem die beim Betrieb wirkenden Momente angreifen. Auf den Lenkervorbau eines Zweirades wirken bei der Benutzung erhebliche Kräfte, insbesondere bei schweren Fahrzeugführern, bei hohen Fahrgeschwindigkeiten, bei Fahrten im Gelände und den damit verbundenen Stößen oder bei der zusätzlichen Belastung der Lenkstange mit einem beladenen Fahrradkorb. Dies führt auch bei der von der DE 29 901 975 U1 vorgeschlagenen Konstruktion zur einem hohen Verschleiß auf den Wirkflächen der der Sperrstücke und der korrespondierenden Flächen der Stangen und bei der Ausgestaltung als rein kraftschlüssige Verbindung zu einer bei hoher Beanspruchung instabilen Konstruktion.

### 3. Darstellung der Erfindung:

Der Erfindung liegt die Aufgabe zugrunde, einen Lenkervorbau zu schaffen, welcher die dargestellten Nachteile vermeidet. Insbesondere soll ein konstruktiv einfacher und auch bei hoher Belastung stabiler Lenkervorbau geschaffen werden, welcher eine einfach zu handhabende Anpassung der Höhe des Lenkerbügels ermöglicht, ohne dass sich gleichzeitig der relative Anstellwinkel des Lenkerbügels zur Sitzposition des Benutzers oder dessen rotative Orientierung quer zur Fahrtrichtung ändern.

Die Aufgabe wird erfindungsgemäß gelöst durch einen Lenkervorbau nach Anspruch 1, vorteilhafte Ausführungen sind in den Unteransprüchen beschrieben.

Den Kern der Erfindung bildet ein höhenverstellbarer Lenkervorbau, bei welchem die Verbindung zwischen Gabelschaft und Lenkerbügel als mehrfaches Parallelgestänge mit mindestens zwei übereinander angeordneten Stangenpaaren ausgebildet ist, wobei die Stangen jeweils seitlich am Gabelschaft angeordnet und an den Enden jeweils senkrecht zur ihrer Längsachse drehbeweglich gelagert sind und die Lager als Drehlager mit außen liegenden Lagerschalen und inneren Lagerzapfen ausgestaltet sind, wobei die außen liegenden Lagerschalen durch eine zylindrische Öffnung in den Stangen gebildet oder als separate Schalen ausgestaltet und mit den Stangen fest verbunden sind, dadurch gekennzeichnet, dass die Drehlager an einem oder an beiden Ende(n) mindestens zweier Stangenpaare in ihrem Freiheitsgrad lösbar fixiert sind, indem die Lagerzapfen gegen eine Federbelastung axial verschiebbar ausgestaltet und durch die korrespondierenden Lagerschalen hindurch geführt sind und an ihren äußeren Enden jeweils als Tellerkopf mit einem axial nach innen gerichteten Verzahnungsring ausgebildet sind und die hierzu korrespondierenden Lagerschalen an ihren äußeren Enden jeweils eine mit dem Verzahnungsring korrespondierende axial nach außen gerichtete stirnseitige Verzahnung aufweisen und wobei beidseitig des Gabelschafts jeweils mindestens zwei übereinander angeordnete Tellerköpfe miteinander fest verbunden sind. Im gelösten Zustand sind die Lagerzapfen entgegen der Federbelastung soweit aus den Lagerschalen herausgedrückt, dass die Verzahnungen nicht mehr ineinandergreifen und die Lagerschalen um die Lagerzapfen frei drehbar sind. Der Lenkervorbau eignet sich sowohl zur Ausgestaltung als Schaftvorbau, als auch als Aheadset-Vorbau. Der erfindungsgemäße Lenkervorbau besitzt den Vorteil, dass die Höhenverstellung des Lenkerbügels aufgrund des Parallelgestänges durch eine bewegliche Verbindung mit nur einem Freiheitsgrad (Rotation der Drehlager) erfolgt. Eine Bewegung des Lenkerbügels ist nur in der Höhe möglich, weshalb keine unbeabsichtigte Verstellung in anderen Bewegungsachsen erfolgen kann. Insbesondere erfolgt bei der Höhenverstellung des Lenkerbügels keine Änderung seines Anstellwinkels, da das Parallelgestänge sowohl am Lenkerschaft, als auch am Lenkerbügel parallel zur Längsachse der Stangen drehbeweglich gelagert ist. Bei der Veränderung der Höhe erfolgt daher lediglich eine parallele Veränderung des Anstellwinkels der einzelnen Stangen, während der Anstellwinkel des Lenkerbügels relativ zur Sitzposition des Benutzers gleich bleibt. Der erfindungsgemäße Lenkervorbau ist sehr stabil, da jeweils mindestens zwei übereinander angeordnete Stangepaare aufgrund der Verbindung der jeweiligen übereinander angeordneten Tellerköpfe an einem gemeinsamen Ende miteinander gleichzeitig formschlüssig fixiert sind. Hierdurch verteilen sich die auf den Fixierungsmechanismus wirkenden Momente jeweils gleichmäßig auf die formschlüssigen Verbindungen mindestens zweier Stangenpaare. Zugleich ist die erfindungsgemäße Vorrichtung konstruktiv einfach, da die Lagerung der Stangen und der Fixierungsmechanismus eine konstruktive Einheit bilden und keine gesonderten Sperrstücke o.ä. erforderlich sind.

Indem die federbelasteten Lagerzapfen der lösbar fixierten Drehlager als druckfederbelastete Lagerzapfen ausgestaltet sind, wobei zur Lösung jeweils zweier gegenüberliegender, in einer gemeinsamen horizontalen Ebene angeordneten Tellerköpfe aus der stirnseitigen Verzahnung der korrespondierenden Lagerschalen jeweils eine zentrale Steuerscheibe mit im Wesentlichen elliptischer Grundfläche vorgesehen ist, wird eine besonders einfach herzustellende, wartungsarme und stabile Mechanik zum Lösen der Fixierung geschaffen. Die elliptische Steuerscheibe ist zentral zwischen zwei gegenüberliegenden Lagerzapfen positioniert. Im fixierten Zustand ist die Steuerscheibe mit ihrem geringsten Durchmesser zwischen zwei gegenüberliegenden, in einer gemeinsamen horizontalen Ebene angeordneten Lagerzapfen positioniert. Durch Drehung der Steuerscheibe werden die gegenüberliegenden Lagerzapfen jeweils ein Stück aus den korrespondierenden Lagerschalen herausgedrückt und so die ineinandergreifende Verzahnung der Tellerköpfe und Lagerschalen gelöst.

In der vorstehenden Ausgestaltung erfolgt die lösbare Fixierung übereinander angeordneter Stangenpaare mittels einer gemeinsamen durchgehenden Steuerscheibe oder mehreren auf einer gemeinsamen vertikalen Welle angeordneten Steuerscheiben. Durch Drehung der Steuerscheide oder der vertikalen Achse wird gleichzeitig die Fixierung mehrerer übereinander angeordneter Stangenpaare gelöst oder geschlossen.

Indem die Lösung der Fixierung der Lagerung über wenigstens einen jeweils über mindestens einen Bowdenzug verbundenen handbedienbaren Hebel, welcher am Lenkerbügel montiert ist, erfolgt, wird eine einfach zu bedienende Höhenverstellung erreicht. Da die Hände zur Lösung der Fixierung nicht vom Lenkerbügel genommen werden müssen und eine Bewegung des Lenkerbügels lediglich auf einer vertikalen Bewegungsachse erfolgt, kann eine Höhenverstellung auch während der Fahrt vorgenommen werden.

In einer alternativen Ausgestaltung erfolgt die Lösung der Fixierung der Drehlager über eine hydraulische Bedienung.

Indem zusätzlich mindestens ein Dämpfungsmittel zur Dämpfung der Höhenverstellung vorgesehen ist, wird eine verbesserte Bedienung der Höhenverstellung erreicht. Das Dämpfungsmittel kann als Stoßdämpfer ausgebildet sein.

Der erfindungsgemäße Lenkervorbau wird nachstehend unter Bezugnahme auf die beigefügten Zeichnungen anhand zweier Ausführungsbeispiele näher beschrieben. Es zeigen:
- Fig.1: eine perspektivische Ansicht eines beispielhaften höhenverstellbaren Lenkervorbaus,
- Fig. 2: eine Ausschnitts-Aufsicht auf den Lenkerschaft-Bereich des höhenverstellbaren Lenkervorbaus gemäß Fig. 1,
- Fig. 3: ein teilweiser Längsschnitt durch den Lenkerschaft-Bereich gemäß Fig. 2 in Seitenansicht,
- Fig. 4: eine perspektivische Ansicht eines beispielhaften höhenverstellbaren Lenkervorbaus mit Bowdenzug-Bedienung.

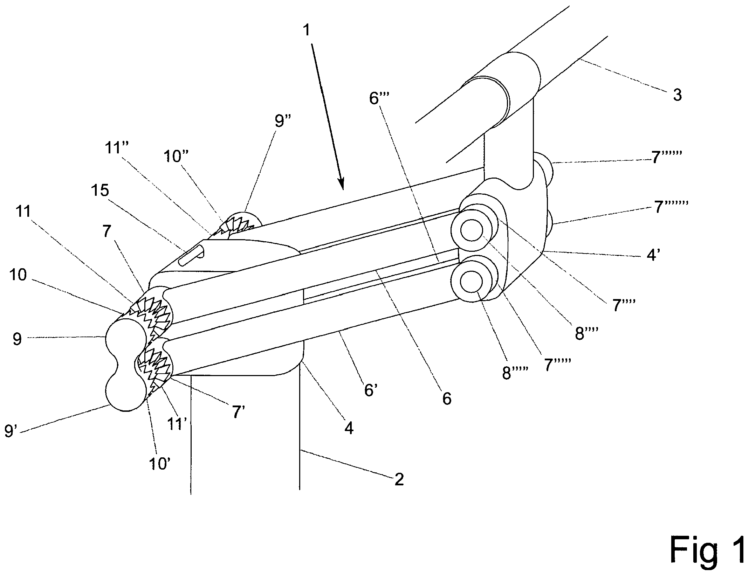

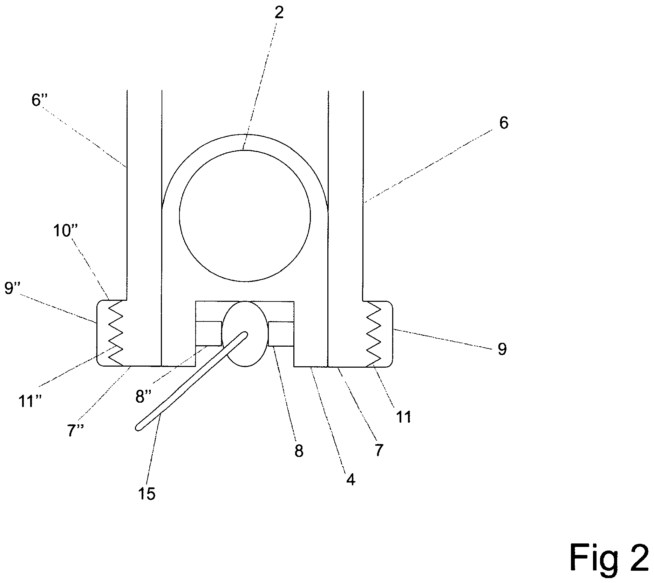

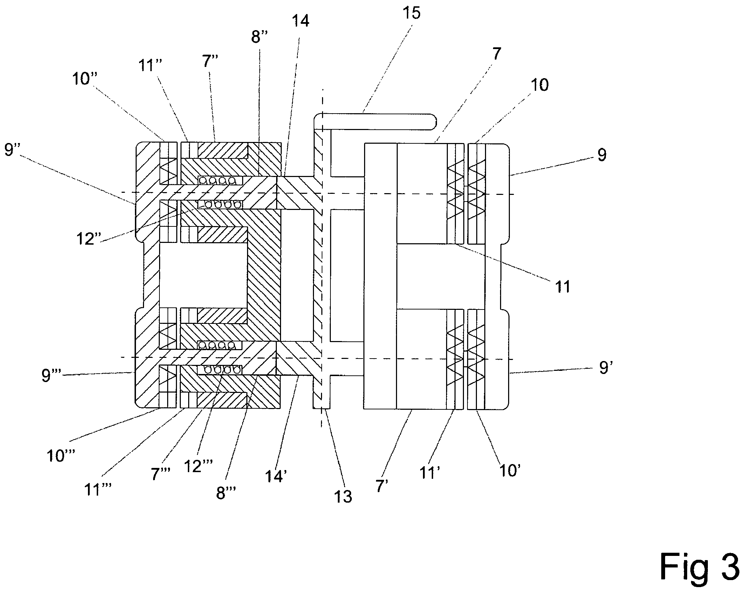

Fig.1 zeigt einen beispielhaften höhenverstellbaren Lenkervorbau in perspektivischer Ansicht. Fig. 2 zeigt den Lenkerschaft-Bereich des höhenverstellbaren Lenkervorbaus gemäß Fig. 1 als Ausschnitt in Aufsicht. Fig. 3 zeigt den Lenkerschaft-Bereich gemäß Fig. 2 als teilweisen Längsschnitt in Seitenansicht. Der Lenkervorbau 1 ist als Aheadset-Vorbau ausgestaltet und verbindet den Gabelschaft 2 mit dem Lenkerbügel 3. Der Lenkerbügel 3 ist in Fig. 1 zur Vereinfachung lediglich ausschnittsweise dargestellt. Hierzu umschließt der Lenkervorbau 1 den Gabelschaft 2 mit der Muffe 4 kraftschlüssig. Die Verbindung zwischen dem Gabelschaft 2 und der Haltemuffe 4' für das Verbindungsstück 5 zum Lenkerbügel 3 ist als doppeltes Parallelgestänge mit den Stangen 6 bis 6'" ausgebildet, welche paarweise jeweils seitlich am Gabelschaft 2 angeordnet sind. Die Stangen 6 bis 6'" sind an ihren Enden jeweils parallel zur Ihrer Längsachse drehbeweglich gelagert. Hierzu sind die Stangen 6 bis 6'" an ihren Enden jeweils fest mit den Lagerschalen 7 bis 7"''"' verbunden. Die Lagerschalen 7 bis 7"''"' sind hierbei als außen liegende Lagerschalen ausgebildet, welche jeweils auf korrespondierenden inneren Lagerzapfen 8 bis 8"""' sitzen. Die drehbewegliche Lagerungen der Stangen 6 bis 6'" sind auf Seiten der Haltemuffe 4' frei beweglich ausgestaltet, indem die außen liegenden Lagerschalen 7"" bis 7"''"' auf korrespondierenden inneren Lagerzapfen 8"" bis 8"""' sitzen. Auf der Seite des Gabelschaftes 2 sind die drehbewegliche Lagerungen der Stangen 6 bis 6'" lösbar fixiert ausgestaltet. Hierzu sind die Lagerzapfen 8 bis 8'" durch die korrespondierenden Lagerschalen (7 bis 7"') hindurch geführt und an ihren äußeren Enden jeweils mit einem Tellerkopf 9 bis 9'" mit axial nach innen gerichteten Verzahnungsringen 10 bis 10'" ausgebildet (von denen perspektivisch bedingt auf den Zeichnungen gemäß Fig. 1 bis 3 nur die Verzahnungsringe 10 bis 10" dargestellt sind). Die seitlich jeweils übereinander angeordneten Tellerköpfe 9 und 9' sowie 9" und 9'" sind jeweils paarweise fest miteinander verbunden. Die hierzu korrespondierenden Lagerschalen 7 bis 7"' sind an ihren äußeren Enden jeweils mit den axial nach außen gerichteten stirnseitigen Verzahnungen 11 bis 11"' ausgebildet (von denen perspektivisch bedingt auf den Zeichnungen gemäß Fig. 1 bis 3 nur die stirnseitigen Verzahnungen 11 bis 11" dargestellt sind). Die beiden korrespondierenden Verzahnungen der Tellerköpfe 9 bis 9'" und der Lagerschalen 7 bis 7"' bilden somit jeweils eine Hirth-Verzahnung. Die Lagerzapfen 8 bis 8'" sind gegen die durch die Spiralfedern 12 bis 12'" (von denen darstellungsbedingt auf dem teilweisen Längsschnitt gemäß Fig. 3 nur die Spiralfedern 12" und 12'" dargestellt sind) ausgeübte Druckfederbelastung axial verschiebbar ausgebildet. Zwischen den Lagerzapfen 8 bis 8'" sind zwei drehbare, auf einer gemeinsamen Welle 13 angeordnete, im Querschnitt elliptische kongruente Steuerscheiben 14 und 14' positioniert. Die Drehungslage der Steuerscheiben 14 und 14' wird über den mit der Welle 13 verbundenen Hebelarm 15 manuell eingestellt. Indem die Drehungslage der Welle 13 so gewählt ist, dass die Steuerscheiben 14 und 14' mit ihrem geringsten Durchmesser zwischen den jeweils gegenüberliegenden Lagerzapfen 8 und 8" sowie 8'" und 8' positioniert sind, sind die Spiralfedern 12 bis 12'" voll ausgedehnt und die Lagerzapfen 8 bis 8'" vollständig in die jeweils korrespondierenden Lagerschalen 7 bis 7"' gedrückt, wobei die korrespondierenden Verzahnungen formschlüssig ineinandergreifen. Da die seitlich übereinander angeordneten Tellerköpfe 9 und 9' sowie 9" und 9"' jeweils paarweise fest miteinander verbunden sind, heben sich die Drehmomente der mit den TellerkopfPaaren korrespondierenden Lagerschalen 7 und 7' sowie 7" und 7"' jeweils gegeneinander auf. In diesem, in Fig. 2 dargestellten Zustand sind die drehbeweglichen Lagerungen der Stangen 6 bis 6'" mithin fixiert, es kann keine Rotation der Lagerschalen 7 bis 7"' um die Lagerzapfen 8 bis 8'" erfolgen. Indem die Drehungslage der Welle 13 so gewählt ist, dass die Steuerscheiben 14 und 14' mit ihrem größten Durchmesser zwischen den jeweils gegenüberliegenden Lagerzapfen 8 und 8" sowie 8'" und 8' positioniert sind, sind die Spiralfedern 12 bis 12'" jeweils zusammengedrückt und die Lagerzapfen 8 bis 8'" sind aus den jeweils korrespondierenden Lagerschalen 7 bis 7"' herausgedrückt, wobei die korrespondierenden Verzahnungen keinen Kontakt besitzen. In diesem, in Fig. 1 und Fig. 3 dargestellten Zustand sind die drehbeweglichen Lagerungen der Stangen 6 bis 6'" gelöst. Die Lagerschalen 7 bis 7"' können sich um die Lagerzapfen 8 bis 8'" drehen. Hierbei erfolgt lediglich eine Verstellung der Höhe des Lenkerbügels 3 durch die parallele Veränderung des Anstellwinkels der Stangen 6 bis 6"', während der Anstellwinkel des Lenkerbügels relativ zur Sitzposition des Benutzers gleich bleibt. Es kann keine unbeabsichtigte Verstellung des Vorbaus 1 oder des Lenkerbügels 3 in anderen Bewegungsachsen erfolgen.

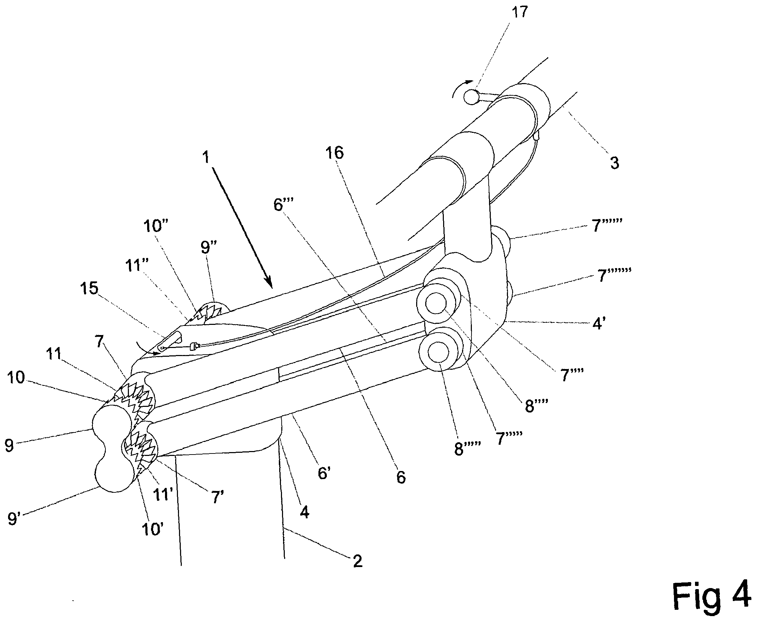

Fig. 4 zeigt den Lenkervorbau 1 gemäß der Fig. 1 bis 3 mit einer zusätzlichen Bowdenzug-Bedienung in perspektivischer Ansicht. Hierzu ist der Hebelarm 15 über den Bowdenzug 16 mit dem handbedienbaren Hebel 17 verbunden, welcher am Lenkerbügel 3 montiert ist. Zum Lösen der drehbeweglichen Lagerungen der Stangen 6 bis 6"' wird der Hebel 17 längs zur Fahrtrichtung nach vorne gedrückt, worauf sich die Welle 13 dreht und Drehungslage der Steuerscheiben 14 und 14' so verändert, dass sie ihrem größten Durchmesser zwischen den jeweils gegenüberliegenden Lagerzapfen 8 und 8" sowie 8"' und 8' positioniert sind. Hierbei werden gleichzeitig die Spiralfedern 12 bis 12"' jeweils zusammengedrückt und die Lagerzapfen 8 bis 8'" aus den jeweils korrespondierenden Lagerschalen 7 bis 7"' herausgedrückt, bis die korrespondierenden Verzahnungen 10 bis 10'" und 11 bis 11'" keinen Kontakt mehr zueinander besitzen. Da in dieser Ausgestaltung die Hände zur Lösung der Fixierung nicht vom Lenkerbügel genommen werden müssen und eine Bewegung des Lenkerbügels lediglich auf einer vertikalen Bewegungsachse erfolgt, kann eine Höhenverstellung auch während der Fahrt vorgenommen werden.

### 4. Gewerbliche Anwendbarkeit:

Der erfindungsgemäße Lenkervorbau eignet sich zur höhenverstellbaren Befestigung des Lenkerbügels von Fahrzeugen, insbesondere Zweirädern sowie für stationäre Fitnessgeräte mit Lenkerbügel. Er kann sowohl als Schaftvorbau, als auch als Aheadset-Vorbau ausgestaltet sein.

## Patentansprüche

1. Höhenverstellbarer Lenkervorbau (1), bei welchem die Verbindung zwischen Gabelschaft (2) und Lenkerbügel (3) als mehrfaches Parallelgestänge mit mindestens zwei übereinander angeordneten Stangenpaaren (6, 6" und 6', 6"') ausgebildet ist, wobei die Stangen (6 bis 6"') jeweils seitlich am Gabelschaft (2) angeordnet und an den Enden jeweils senkrecht zur ihrer Längsachse drehbeweglich gelagert sind und die Lager als Drehlager mit außen liegenden Lagerschalen (7 bis 7'""") und inneren Lagerzapfen (8 bis 8'""") ausgestaltet sind, wobei die außen liegenden Lagerschalen (7 bis 7"""') durch eine zylindrische Öffnung in den Stangen gebildet oder als separate Schalen ausgestaltet und mit den Stangen (6 bis 6"') fest verbunden sind, **dadurch gekennzeichnet, dass** die Drehlager an einem oder an beiden Ende(n) mindestens zweier Stangenpaare (6, 6" und 6', 6"') in ihrem Freiheitsgrad lösbar fixiert sind, indem die Lagerzapfen (8 bis 8"') gegen eine Federbelastung axial verschiebbar ausgestaltet und durch die korrespondierenden Lagerschalen (7 bis 7"') hindurch geführt sind und an ihren äußeren Enden jeweils als Tellerkopf (9 bis 9"') mit einem axial nach innen gerichteten Verzahnungsring (10 bis 10"') ausgebildet sind und die hierzu korrespondierenden Lagerschalen (7 bis 7'") an ihren äußeren Enden jeweils eine mit dem Verzahnungsring (10 bis 10"') korrespondierende axial nach außen gerichtete stirnseitige Verzahnung (11 bis 11'") aufweisen und wobei beidseitig des Gabelschafts (2) jeweils mindestens zwei übereinander angeordnete Tellerköpfe (9, 9' und 9", 9"') miteinander fest verbunden sind.

2. Höhenverstellbarer Lenkervorbau (1) nach Anspruch 1, **dadurch gekennzeichnet, dass** die federbelasteten Lagerzapfen (8 bis 8"') der lösbar fixierten Drehlager als druckfederbelastete Lagerzapfen (8 bis 8'") ausgestaltet sind, wobei zur Lösung jeweils zweier gegenüberliegender, in einer gemeinsamen horizontalen Ebene angeordneten Tellerköpfe (9, 9" und 9' und 9'") aus der stirnseitigen Verzahnung (11 bis 11'") der korrespondierenden Lagerschalen (7 bis 7"') jeweils eine zentrale Steuerscheibe (14, 14') mit im Wesentlichen elliptischer Grundfläche vorgesehen ist.

3. Höhenverstellbarer Lenkervorbau (1) nach Anspruch 2, **dadurch gekennzeichnet, dass** zur Lösung der Fixierung übereinander angeordneter Stangenpaare (6, 6" und 6', 6"') eine gemeinsame durchgehende Steuerscheibe oder mehrere auf einer gemeinsamen vertikalen Welle (13) angeordnete Steuerscheiben (14, 14') vorgesehen ist oder sind.

4. Höhenverstellbarer Lenkervorbau (1) nach einem der Ansprüche 1 bis 3, **dadurch gekennzeichnet, dass** die Lösung der Fixierung über wenigstens einen jeweils über mindestens einen Bowdenzug (16) verbundenen handbedienbaren Hebel (17), welcher am Lenkerbügel montiert ist, erfolgt.

5. Höhenverstellbarer Lenkervorbau (1) nach einem der Ansprüche 1 bis 4, **dadurch gekennzeichnet, dass** die Lösung der Fixierung der Drehlager über eine hydraulische Bedienung erfolgt.

6. Höhenverstellbarer Lenkervorbau (1) nach einem der Ansprüche 1 bis 5, **dadurch gekennzeichnet, dass** zusätzlich mindestens ein Dämpfungsmittel zur Dämpfung der Höhenverstellung vorgesehen ist.

## Claims

1. A height-adjustable handlebar stem (1), wherein the connection between the steer tube (2) and the handlebar (3) is formed as a multiple parallel linkage with at least two rod pairs (6, 6" and 6', 6"') disposed above one another, wherein the bars (6 to 6"') are each laterally disposed on the steer tube (2) and are each supported on the ends so as to be rotationally movable perpendicularly to their longitudinal axis, and the bearings are designed as rotary bearings with externally located bearing cups (7 to 7"""') and inner bearing journals (8 to 8"""'), wherein the externally located bearing cups (7 to 7"""') are formed through a cylindrical opening in the bars or as separate cups and are fixedly connected to the bars (6 to 6"'), **characterised in that** the rotary bearings are fixed detachably in their degree of freedom to one or both ends of at least two rod pairs (6, 6" and 6', 6"') by the bearing journals (8 to 8"') being designed so as to be axially displaceable against a spring loading and being passed through the corresponding bearing cups (7 to 7"') and being each formed at the outer ends thereof as a plate head (9 to 9"') with an axially inwardly directed toothing ring (10 to 10"'), and by the bearing cups (7 to 7"') corresponding therewith each having, on the outer ends thereof, an axially outwardly directed front-facing toothing (11 to 11"') that corresponds with the toothing ring (10 to 10"'), and wherein on both sides of the steer tube (2), in each case at least two plate heads (9, 9' and 9", 9'") disposed above one another are firmly connected to each other.

2. The height-adjustable handlebar stem (1) as claimed in claim 1, **characterised in that** the spring-loaded bearing journals (8 to 8"') of the detachably fixed rotary bearings are designed as compression spring loaded bearing journals (8 to 8'"), wherein for releasing in each case two oppositely disposed plate heads (9, 9" and 9' and 9"'), which are disposed above one another in a common horizontal plane, from the front-facing toothing (11 to 11'") of the corresponding bearing cups (7 to 7"'), a central control disc (14, 14') with a substantially elliptic base surface is respectively provided.

3. The height-adjustable handlebar stem (1) as claimed in claim 2, **characterised in that** for releasing the fixing of rod pairs (6, 6" and 6' and 6'") disposed above one another, a common continuous control disc or a plurality of control discs (14, 14') disposed on a common vertical shaft (13) is or are provided.

4. The height-adjustable handlebar stem (1) as claimed in any one of claims 1 to 3, **characterised in that** the release of the fixing is achieved via at least one manually operatable lever (17) mounted on the handlebar, which is in each case connected via at least one Bowden cable (16).

5. The height-adjustable handlebar stem (1) as claimed in any one of claims 1 to 4, **characterised in that** the release of the fixing of the rotary bearings is carried out via a hydraulic operation.

6. The height-adjustable handlebar stem (1) as claimed in any one of claims 1 to 5, **characterised in that** in addition at least one damping means for damping the height adjustment is provided.

## Revendications

1. Potence de guidon réglable en hauteur (1), pour laquelle la liaison entre l'arbre de fourche (2) et l'étrier de guidon (3) est réalisée comme tringlerie parallèle multiple avec au moins deux paires de tige (6, 6" et 6', 6"') agencées l'une au-dessus de l'autre, dans laquelle les tiges (6 à 6"') sont agencées respectivement latéralement sur l'arbre de fourche (2) et sont logées sur les extrémités respectivement perpendiculairement à leur axe longitudinal de manière mobile en rotation et les paliers sont configurés comme paliers rotatifs avec des coques de palier (7 à 7'""") extérieures et des tourillons intérieurs (8 à 8'"""), dans lequel les coques de palier (7 à 7"""') extérieures sont formées par une ouverture cylindrique dans les tiges ou sont configurées comme des coques séparées et sont reliées fixement avec les tiges (6 à 6"'), **caractérisée en ce que** les paliers rotatifs sont fixés de manière détachable dans leur degré de liberté sur une ou sur les deux extrémités au moins de deux paires de tige (6, 6" et 6', 6"') **en ce que** les tourillons (8 à 8"') sont configurés de manière mobile axialement contre une sollicitation de ressort et sont guidés par les coques de palier (7 à 7"') correspondantes et sont réalisés sur leurs extrémités extérieures respectivement comme tête à plateau (9 à 9"') avec un anneau de denture (10 à 10"') dirigé axialement vers l'intérieur et les coques de palier correspondant à celui-ci (7 à 7"') présentent sur leurs extrémités extérieures respectivement une denture (11 à 11"') côté avant dirigée axialement vers l''extérieur correspondant à l'anneau de denture (10 à 10"') et dans laquelle de part et d'autre de l'arbre de fourche (2), respectivement au moins deux têtes à plateau (9, 9' et 9", 9"') agencées l'une au-dessus de l'autre sont reliées fixement l'une à l'autre.

2. Potence de guidon réglable en hauteur (1) selon la revendication 1, **caractérisée en ce que** les tourillons (8 à 8"') sollicités par ressort des paliers rotatifs fixés de manière détachable sont configurés comme des tourillons sollicités par ressort de pression (8 à 8"'), dans laquelle pour détacher respectivement deux têtes à plateau (9, 9" et 9' et 9"') agencées dans un plan horizontal commun, en regard, de la denture côté avant (11 à 11"') des coques de palier correspondantes (7 à 7'"), respectivement un disque de commande central (14, 14') est prévu avec une surface de base sensiblement elliptique.

3. Potence de guidon réglable en hauteur (1) selon la revendication 2, **caractérisée en ce qu'**un disque de commande continu commun ou plusieurs disques de commande (14, 14') agencés sur un arbre vertical commun (13) est prévu ou sont prévus pour détacher la fixation de paires de tige (6, 6" et 6', 6"') agencées l'une au-dessus de l'autre.

4. Potence de guidon réglable en hauteur (1) selon l'une quelconque des revendications 1 à 3, **caractérisée en ce que** le détachement de la fixation est effectué par au moins un levier (17) commandable à la main relié respectivement par au moins un câble Bowden (16), qui est monté sur l'étrier de guidon.

5. Potence de guidon réglable en hauteur (1) selon l'une quelconque des revendications 1 à 4, **caractérisée en ce que** le détachement de la fixation des paliers rotatifs est effectué par une commande hydraulique.

6. Potence de guidon réglable en hauteur (1) selon l'une quelconque des revendications 1 à 5, **caractérisée en ce qu'**en outre, au moins un moyen d'amortissement est prévu pour l'amortissement du réglage en hauteur.
